# EUROPÄISCHE PATENTSCHRIFT

(11) **EP 0 655 372 B1**
(45) Veröffentlichungstag und Bekanntmachung des Hinweises auf die Patenterteilung: **29.01.1997**
(21) Anmeldenummer: 94118194.3
(22) Anmeldetag: 18.11.1994
(51) Int. Cl.: B60R 22/415

(54) **Gurtaufroller für Fahrzeugsicherheitsgurte**
Belt retractor for vehicle safety belts
Rétracteur de sangle pour ceintures de sécurité de véhicule

(30) Priorität: 30.11.1993 DE 9318286 U
(43) Veröffentlichungstag der Anmeldung: 31.05.1995
(73) Patentinhaber: TRW Occupant Restraint Systems GmbH, 73553 Alfdorf (DE)
(72) Erfinder: Bareiss, Rainer, D-73553 Alfdorf-Voggenberg (DE)
(74) Vertreter: Degwert, Hartmut, Dipl.-Phys.

(56) Entgegenhaltungen:
- DE-A- 3 809 007
- US-A- 4 583 701
- US-A- 4 726 539
- US-A- 4 729 524
- US-A- 4 747 562
- US-A- 4 749 143
- US-A- 4 809 926
- US-A- 4 915 321

## Beschreibung

Die Erfindung betrifft einen Gurtaufroller für Fahrzeugsicherheitsgurte, insbesondere einen Gurtaufroller mit einer Kindersicherung, die unabhängig von der fahrzeug- und/oder gurtbandsensitiven Sperreinrichtung wirkt.

Ein derartiger Gurtaufroller, dessen Gattung aus der DE 38 09 007 C2 bekannt ist, enthält einen Sperrmechanismus zur Blockierung der in einem Gehäuse drehbar gelagerten Gurtspule. Für die Aktivierung des Sperrmechanismus ist ein Auslösemechanismus vorgesehen, der eine relativ zur Gurtspule begrenzt verdrehbare verzahnte Steuerscheibe aufweist, durch deren Relativdrehung zur Gurtspule der Sperrmechanismus aktiviert wird. Für die Aktivierung der Kindersicherung ist ein hebelförmiges Schaltelement vorgesehen, das zwischen zwei stabilen Schaltstellungen umschaltbar ist und in der ersten Schaltstellung den Sperrmechanismus aktiviert sowie in der zweiten Stellung den Sperrmechanismus freigibt. Die Umsteuerung des Schaltelementes zwischen den zwei Schaltstellungen erfolgt in Abhängigkeit von der auf der Gurtspule aufgewickelten Gurtbandmenge, indem die Gurtspulendrehung mittels eines Planetenzahnradgetriebes untersetzt und in die gewünschten Schalthübe umgesetzt wird. Das Planetenzahnradgetriebe enthält ein drehfest an die Gurtspule angeschlossenes Sonnenrad, ein gehäusefestes Hohlrad und ein Planetenrad, das eine Außenverzahnung aufweist und mit dem Sonnenrad sowie dem Hohlrad in Eingriff steht.

Bei dem bekannten Gurtaufroller ist an dem Planetenrad ein Schaltnocken gebildet, der bei einer bestimmten Umlauf- und Drehstellung des Planetenrades entprechend einem vorbestimmten Durchmesser des Gurtbandwickels auf der Gurtspule gegen einen von zwei Stößeln drückt, der seinerseits auf das Schaltelement einwirkt und dieses in seine jeweils andere Schaltstellung bewegt. Der Schaltnocken des Planetenrades kommt bei einer anderen Umlauf- und Drehstellung, die einem geringeren Durchmesser des Gurtbandwickels entspricht, mit dem zweiten Stößel in Berührung, durch den das Schaltelement dann wieder zurückgeschaltet wird. Das Schaltelement wirkt auf einen Steuerhebel, durch den die Sperrklinke des Sperrmechanismus betätigt wird.

Der Erfindung liegt die Aufgabe zugrunde, einen Gurtaufroller der oben beschriebenen Art bei im wesentlichen unveränderter Funktion baulich zu vereinfachen und kompakter auszubilden.

Diese Aufgabe wird bei einem gattungsgemäßen Gurtaufroller erfindungsgemäß dadurch gelöst, daß das Schaltelement als am Gehäuse schwenkbar gelagerte Schaltwippe ausgebildet ist, die zwei Betätigungsarme und eine Sperrklinke aufweist, die in der ersten Schaltstellung an der Steuerscheibe angreift und sie drehfest hält, und daß die Außenverzahnung des Planetenrades wenigstens einen in Radialrichtung überlangen Schaltzahn umfaßt, der in einer bestimmten Umlauf- und Drehstellung des Planetenrades mit einem der Betätigungsarme der Schaltwippe direkt in Eingriff gelangt und die Schaltwippe in ihre jeweils andere Schaltstellung drückt. Durch den am Planetenrad gebildeten Schaltzahn kann die Betätigung der Schaltwippe unmittelbar erfolgen, so daß Übertragungselemente wie die beim Stand der Technik vorgesehenen Stößel entfallen können. Zugleich entfällt ein gesonderter Schaltnocken am Planetenrad, durch den die Höhe des Planetenrades und somit die axiale Baugröße des Gurtaufrollers vergrößert würde. Da ferner die Schaltwippe mit der daran gebildeten Sperrklinke unmittelbar in die Steuerscheibe des fahrzeug- und gurtbandsensitiven Auslösemechanismus eingreift, kann ein gesonderter Steuerhebel entfallen.

Bei der bevorzugten Ausführungsform des Gurtaufrollers sind zwei in Umfangsrichtung gegeneinander versetzt angeordnete Planetenräder vorgesehen, die jeweils einen Schaltzahn aufweisen, wobei das erste Planetenrad in einer bestimmten Umlauf- und Drehstellung mit dem einen und das zweite in einer anderen Dreh- und Umlaufstellung mit dem anderen Betätigungsarm der Schaltwippe in Eingriff gelangt. Somit wird ein Planetenrad zur Einschaltung und das andere zur Ausschaltung der Kindersicherung verwendet. Die jeweiligen Schaltpunkte können auf diese Weise leicht eingestellt werden. Bei der bevorzugten Ausführungsform des Gurtaufrollers ist ferner die Drehstellung des Schaltzahnes an jedem Planetenrad nach jedem vollständigen Umlauf um das Teilungsmaß seiner Verzahnung oder ein Mehrfaches dieses Teilungsmaßes versetzt. Nach jedem Umlauf des Planetenrades ist somit sein Schaltzahn um einen bestimmten Winkel versetzt, so daß genau errechnet werden kann, nach welcher Anzahl von Umläufen er auf den Betätigungsarm der Schaltwippe trifft.

Weitere Merkmale und Vorteile der Erfindung ergeben sich aus der folgenden Beschreibung einer bevorzugten Ausführungsform des Gurtaufrollers und aus der Zeichnung, auf die Bezug genommen wird. In der Zeichnung zeigen:
- Fig. 1: eine schematische Seitenansicht des Gurtaufrollers, worin einige Teile aufgebrochen dargestellt sind; und

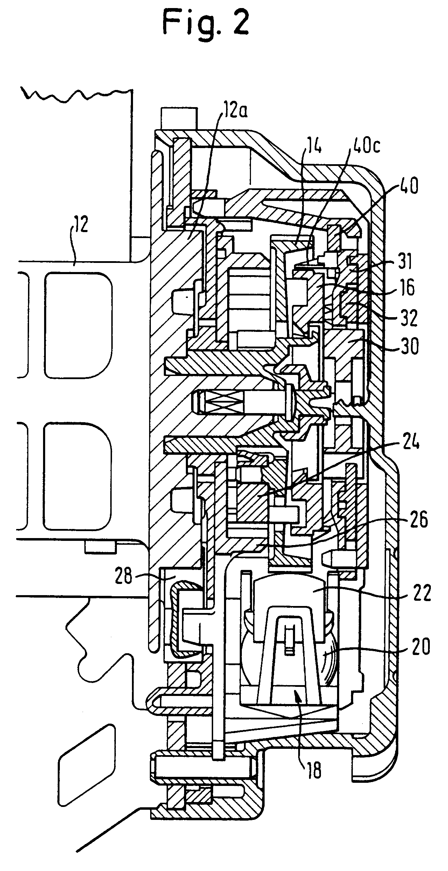

- Fig. 2: einen schematischen Schnitt durch die Achse des in Fig. 1 gezeigten Gurtaufrollers.

Zwischen den zwei Schenkein eines U-förmigen Gehäuses 10 ist eine Gurtspule 12 drehbar gelagert. An einem seitlichen Flansch 12a der Gurtspule 12 ist in herkömmlicher Weise eine außenverzahnte Kupplungsscheibe 14, an die eine außenverzahnte Steuerscheibe 16 begrenzt drehbar angekoppelt ist, drehfest angeschlossen. Ein fahrzeugsensitiver Auslösemechanismus, der am Gehäuse 10 schwenkbar gelagert und in den Figuren allgemein mit 18 bezeichnet ist, umfaßt eine auf einer Kugel 20 aufliegende Steuerklinke 22, die bei fahrzeugsensitiver Bewegung der Kugel 20 mit der Außenverzahnung der Kupplungsscheibe 14 in Eingriff kommt. Durch die Drehung der Kupplungsscheibe 14 wird der Auslösemechanismus 18 verschwenkt, um in bekannter Weise eine Sperrklinke 28 zu aktivieren, die dann in eine Außenverzahnung am Flansch 12a der Gurtspule eingreift und diese drehfest blockiert. Der gleiche Blockiervorgang wird gurtbandsensitiv mittels der Steuerscheibe 16 ausgelöst, die sich aufgrund ihrer Massenträgheit einer schnellen Drehbeschleunigung widersetzt, so daß es zu einer Relativdrehung zwischen Gurtspule 12 und Steuerscheibe 16 kommt, welche über eine Kupplungsklinke 24 und einen Steuerhebel 26 auf die Sperrklinke 28 übertragen wird.

Zur Sicherung eines Kindersitzes im Fahrzeug kann der Gurtaufroller durch Ausziehen einer bestimmten Gurtbandlänge in den Sperrzustand versetzt werden. Nachdem das Gurtband nahezu vollständig wieder aufgewickelt ist, wird der Gurtaufroller in den fahrzeug- und gurtbandsensitiven Sperrmodus zurückgeschaltet. Die Gurtspulendrehung muß also in Schalthübe umgesetzt werden, nämlich einen Einschalthub zur Einschaltung des Sperrmechanismus bei nahezu vollständig abgewickeltem Gurtband und einem Ausschalthub bei nahezu vollständig wieder aufgewickeltem Gurtband. Zu diesem Zweck ist ein Planetenzahnradgetriebe vorgesehen, welches ein drehfest an den Flansch 12a der Gurtspule 12 angeschlossenes Sonnenrad 30, ein am Gehäuse 10 befestigtes, innenverzahntes Hohlrad 31 und zwei außenverzahnte, um 180° gegeneinander versetzt angeordnete Planetenräder 34, 32 umfaßt, die mit dem Sonnenrad 30 und dem Hohlrad 31 in Kämmeingriff stehen. Die Planetenräder 32, 34 weisen jeweils acht Zähne auf, von denen sieben stumpf ausgebildet sind und der achte jeweils radial verlängert als Schaltzahn 32a bzw. 34a ausgebildet ist.

Eine als zweiarmiger Hebel ausgebildete Schaltwippe 40 ist schwenkbar auf einem gehäusefesten Zapfen gelagert und weist zwei Betätigungsarme 40a, 40b auf, von denen der Betätigungsarm 40b mit einer angeformten Schaltklinke 40c versehen ist. Die Schaltklinke 40c ist je nach der Schaltstellung der Schaltwippe 40 entweder mit einer Außenverzahnung an der Trägheitsscheibe 16 in Eingriff oder außer Eingriff mit dieser. Wenn die Schaltklinke 40c mit der Außenverzahnung der Steuerscheibe 16 in Eingriff steht, hält sie diese drehfest, so daß durch Relativdrehung zwischen Gurtspule 12 und Steuerscheibe 16 der Sperrmechanismus des Gurtaufrollers in der oben beschriebenen Weise aktiviert wird. Die Verzahnungsgeometrie an der Steuerscheibe 16 einerseits und der Schaltklinke 40c andererseits ist jedoch so gewählt, daß eine Drehung des Gurtaufrollers in Aufrollrichtung möglich ist.

Die Schaltwippe 40 trägt zwischen ihren beiden Betätigungsarmen einen Nocken 40d, der mit einem federbeaufschlagten Druckstück 44 zusammenwirkt, um die Schaltwippe 40 bistabil jeweils in einer von zwei möglichen Schaltstellungen zu halten.

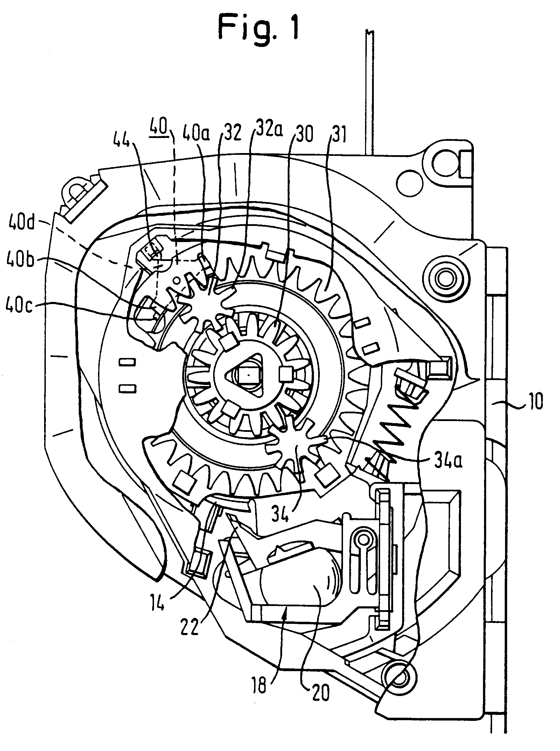

Das Hohlrad 31 ist in Gegenüberlage zu den Betätigungsarmen 40a, 40b der Schaltwippe 40 mit je einer Lücke versehen, durch die hindurch die Schaltzähne 32a bzw. 34a auf den betreffenden Betätigungsarm der Schaltwippe 40 drücken können, wenn sie sich in der hierfür geeigneten Umlauf- und Drehstellung befinden. In Fig. 1 kann angenommen werden, daß der Schaltzahn 32a bei geeigneter Umlauf- und Drehstellung des Planetenrades 32 auf den Betätigungsarm 40a der Schaltwippe drückt, um den Schaltzahn 40c in die Umfangsverzahnung der Steuerscheibe 16 einzusteuern; mittels des Schaltzahns 34a wird hingegen, wenn sich das Planetenrad 34 in der geeigneten Umlauf- und Drehstellung befindet, auf den Betätigungsarm 40b der Schaltwippe 40 gedrückt, um die Schaltwippe wieder in ihre Ausgangslage zurückzustellen.

Die Zahnteilungen des Sonnenrades 30, des Hohlrades 31 und der Planetenräder 32, 34 sind so gewählt, daß nach jedem vollständigen Umlauf eines Planetenrades sein Schaltzahn 32a bzw. 34a um das Teilungsmaß seiner Verzahnung versetzt ist. Aufgrund dieser konstruktiven Vorgaben ist es leicht möglich, die in Abhängigkeit von der auf- bzw. abgewickelten Gurtbandmenge zu wählenden Schaltpunkte zur Aktivierung und Deaktivierung des Sperrmechanismus einzustellen.

## Patentansprüche

1. Gurtaufroller für Fahrzeugsicherheitsgurte, mit
a) einer in einem Gehäuse (10) drehbar gelagerten Gurtspule (12);
b) einem Sperrmechanismus (28) zur Blockierung der Gurtspulendrehung;
c) einem Auslösemechanismus (18), der eine relativ zur Gurtspule (12) begrenzt verdrehbare Steuerscheibe (16) aufweist, durch deren Relativdrehung zur Gurtspule (12) der Sperrmechanismus aktivierbar ist;
d) einem Schaltelement (40), das zwischen zwei stabilen Schaltstellungen umschaltbar ist und in der ersten Schaltstellung den Sperrmechanismus (28) aktiviert sowie in der zweiten Stellung den Sperrmechanismus freigibt;
e) einem Planetenzahnradgetriebe mit einem drehfest an die Gurtspule (12) angeschlossenen Sonnenrad (30), einem gehäusefesten Hohlrad (31) und wenigstens einem Planetenrad (32, 34), das eine Außenverzahnung aufweist und mit dem Sonnenrad (30) und dem Hohlrad (31) in Eingriff steht;
dadurch gekennzeichnet, daß das Schaltelement als schwenkbar gelagerte Schaltwippe (40) ausgebildet ist, die zwei Betätigungsarme (40a, 40b) und eine Schaltklinke (40c) aufweist, die in der ersten Schaltstellung an der Steuerscheibe (16) angreift und sie drehfest hält, und daß die Außenverzahnung des Planetenrades (32, 34) wenigstens einen in Radialrichtung überlangen Schaltzahn (32a, 34a) umfaßt, der in einer bestimmten Umlauf- und Drehstellung des Planetenrades (32, 34) mit einem der Betätigungsarme der Schaltwippe (40) direkt in Eingriff gelangt und die Schaltwippe (40) in ihre jeweils andere Schaltstellung drückt.

2. Gurtaufroller nach Anspruch 1, dadurch gekennzeichnet, daß zwei in Umfangsrichtung gegeneinander versetzt angeordnete Planetenräder (32, 34) mit je einem Schaltzahn (32a, 34a) vorgesehen sind, von denen das erste (32) in einer bestimmten Umlauf- und Drehstellung mit dem einen (40a) und das zweite (34) in einer anderen Dreh- und Umlaufstellung mit dem anderen Betätigungsarm (40b) der Schaltwippe (40) in Eingriff gelangt.

3. Gurtaufroller nach Anspruch 1 oder 2, dadurch gekennzeichnet, daß die Drehstellung des Schaltzahnes (32a, 34a) am Planetenrad (32, 34) nach jedem vollständigen Umlauf um das Teilungsmaß seiner Verzahnung oder ein Mehrfaches dieses Teilungsmaßes versetzt ist.

## Claims

1. A belt retractor for a vehicle safety belt, comprising
a) a belt drum (12) mounted for rotation in a housing (10);
b) a locking mechanism (28) for locking rotation of the belt drum;
c) an actuating mechanism (18), which possesses a control disk (16) able to turn to a limited extent in relation to the belt drum (12) and by whose rotation in relation to the belt drum (12) the locking mechanism can be activated;
d) a switching element (40), which is able to be switched over between two stable switching positions so that in the first switching position it activates the locking mechanism (28) whereas in the second position it releases the locking mechanism (28);
e) a planet wheel gearing means, with a sun wheel (30) secured in such a manner as to prevent relative rotation to the belt drum (12), a ring gear (31) secured to the housing, and at least one planet wheel (32, 34) which possesses external teeth and is in mesh with the sun wheel (30) and with the ring gear (31);
characterized in that the switching element is designed in the form of a pivotally mounted rocker (40) which possesses two actuating arms (40a, 40b) and a switching pawl (40c), which in the first switching position acts on the control disk (16) and holds the same preventing rotation, and the external teeth of the planet wheel (32, 34) comprise at least one actuating tooth (32a, 34a) which is oversize in the radial direction and which in a predetermined position of orbiting movement and rotation of the planet wheel (32, 34) comes into direct engagement with one of the actuating arms of the switching rocker (40) and pushes the same into its respective other switching position.

2. The belt retractor as claimed in claim 1, characterized in that two planet wheels (32, 34), which are offset in relation to one another in the peripheral direction, are each provided with a switching tooth (32a, 34a), a first one (32) of the planet wheels coming into engagement with the one actuating arm (40a) of the switching rocker (40) in a predetermined position of orbiting movement and rotation and the second one (34) coming into engagement with the other actuating arm (40b) of the switching rocker (40) in a different position of orbiting movement and rotation.

3. The belt retractor as claimed in claim 1 or in claim 2, characterized in that after each complete orbit the rotational position of the switching tooth (32a, 34a) on the planet wheel (32, 34) is offset by the size of the pitch of its teeth or a multiple thereof.

## Revendications

1. Enrouleur de ceinture pour ceinture de sécurité de véhicule, avec
a) une bobine de ceinture (12) montée de façon à pouvoir tourner dans un boîtier (10);
b) un mécanisme d'arrêt (28) pour bloquer la rotation de la bobine de la ceinture;
c) un mécanisme de libération (18), qui présente un disque de commande (16) qui peut tourner de façon limitée par rapport à la bobine de la ceinture (12), dont la rotation relative par rapport à la bobine de la ceinture (12) peut activer le mécanisme d'arrêt;
d) un élément de commande (40), qui peut être inversé entre deux positions stables de commande et qui active dans la première position de commande le mécanisme d'arrêt (28) et libère dans la seconde position le mécanisme d'arrêt;
e) une boîte à engrenages planétaires avec une roue solaire (30) raccordée de façon solidaire en rotation à la bobine de la ceinture (12), une roue creuse (31) solidaire du boîtier et au moins une roue planétaire (32, 34), qui présente une denture externe et est en prise avec la roue solaire (30) et la roue creuse (31);
caractérisé en ce que l'élément de commande est constitué sous la forme d'une bascule de commande (40) montée de façon à pouvoir pivoter, bascule qui présente deux bras d'actionnement (40a, 40b) et un cliquet de commande (40c), qui vient en prise dans la première position de commande sur le disque de commande (16) et l'empêche de tourner et en ce que la denture externe de la roue planétaire (32, 34) comprend au moins une dent de commande (32a, 34a) plus longue dans le sens radial qui arrive directement en prise dans une position déterminée de révolution et de rotation de la roue planétaire (32, 34) avec l'un des bras d'actionnement de la bascule de commande (40) et met la bascule de commande (40) dans son autre position de commande.

2. Enrouleur de ceinture selon la revendication 1, caractérisé en ce que l'on prévoit deux roues planétaires (32, 34), disposées de façon décalée l'une par rapport à l'autre dans le sens périphérique avec chacune une dent de commande (32a, 34a), dont la première (32) vient en prise, dans une position déterminée de révolution et de rotation, avec l'un des bras d'actionnement (40a) de la bascule de commande (40) et la seconde (34), dans une autre position de rotation et de révolution, avec l'autre bras d'actionnement (40b) de la bascule de commande (40).

3. Enrouleur de ceinture selon la revendication 1 ou 2, caractérisé en ce que la position de rotation de la dent de commande (32a, 34a) sur la roue planétaire (32, 34) est décalée après chaque révolution complète d'une division de sa denture ou d'un multiple de cette division.
